# EUROPÄISCHE PATENTSCHRIFT

(11) **EP 1 212 231 B1**
(45) Veröffentlichungstag und Bekanntmachung des Hinweises auf die Patenterteilung: **26.03.2003**
(21) Anmeldenummer: 00969222.9
(22) Anmeldetag: 02.09.2000
(51) Int. Cl.: B62D 5/097, B62D 5/32

(54) **HYDRAULISCHE LENKEINRICHTUNG MIT ÜBERSETZUNGSÄNDERUNG**
HYDRAULIC STEERING DEVICE WITH CHANGE OF TRANSMISSION RATIO
SYSTEME DE DIRECTION HYDRAULIQUE A CHANGEMENT DE RAPPORT DE TRANSMISSION

(30) Priorität: 07.09.1999 DE 19942544
(43) Veröffentlichungstag der Anmeldung: 12.06.2002
(73) Patentinhaber: Bosch Rexroth AG, 97816 Lohr am Main (DE)
(72) Erfinder: VOSS, Gerhard, 19370 Parchim (DE); BERGMANN, Erhard, 19079 Banzkow (DE); VOSSBERG, Hartmut, 19370 Parchim (DE)
(74) Vertreter: Jaap, Reinhard
(86) Internationale Anmeldenummer: DE0003008
(87) Internationale Veröffentlichungsnummer: WO01017840

(56) Entgegenhaltungen:
- DD-A- 99 758
- DD-A- 117 652
- DE-A- 19 607 064
- US-A- 3 707 200

## Beschreibung

Die Erfindung bezieht sich auf eine hydraulische Lenkeinrichtung nach dem Oberbegriff des Anspruchs 1.
Solche Lenkeinrichtungen werden insbesondere in langsamfahrenden Fahrzeugen eingesetzt und sind aus der DD 99758 bekannt.

Lenkeinrichtungen dieser Art sind seit langem bekannt und kommen in den vielfälltigsten Ausführungen zum Einsatz. Sie bestehen in der Hauptsache aus einem Drehschiebersteuerventil und einem Orbitverdränger. Das Drehschiebersteuerventil wird aus einer äußeren, im Gehäuse eingepaßten Steuerhülse und einem inneren, konzentrisch angeordneten Steuerkolben gebildet. Der Steuerkolben ist einerseits über ein Zahnnabenprofil mit einem Lenkrad und andererseits über eine Stiftverbindung relativ beweglich mit der Steuerhülse verbunden. Die Steuerhülse ist wiederum über eine Stiftverbindung und eine Antriebswelle starr mit dem Läuferzahnrad des Orbitverdrängers verbunden und mittels eines Federelementes gegenüber dem Steuerkolben lagezentriert. Gegen die Kraft dieses Federelementes sind Steuerkolben und Steuerhülse begrenzt zueinander drehbar. Zwischen dem Drehschiebersteuerventil und dem Orbitverdränger besteht über Kommutatorbohrungen eine hydraulische Verbindung.

Die hydraulische Lenkeinrichtung besitzt Anschlüsse für einen Zulauf, einen Rücklauf und für zwei Zylinderleitungen für den Stellzylinder der Räder.
Diese Lenkeinrichtungen zeichnen sich durch ein hohes Verdrängungsvolumen ohne Übersetzungsverhältnis zwischen Servo- und Notbetrieb aus.
Das bedeutet aber, daß bei einem möglichen Ausfall der Versorgungspumpe die Lenkeinrichtung schlagartig auf Notbetrieb umschaltet und damit die gesamte notwendige Lenkkraft manuell am Lenkrad aufgebracht werden muß. Das ist insbesondere im Straßenverkehr ein Sicherheitsrisiko.

Zur Lösung dieses Problemes sind aus der DD 99 758 verschiedenartige Lenkeinrichtungen mit Übersetzungsänderung bekannt, insbesondere solche, die zwei parallel geschaltete Orbitverdränger besitzen.
Dabei sind die Läuferzahnräder beider Orbitverdränger durch ein Kupplungsstück mechanisch und jede veränderliche Kammer des ersten Orbitverdrängers über eine zugehörige und den ersten Orbitverdränger umgehende Kammerleitung mit einer zugehörigen veränderlichen Kammer des zweiten Orbitverdrängers hydraulisch verbunden.

In einer ersten Variante ist in jeder der sieben umgehenden Kammerleitungen ein entsperrbares Rückschlagventil angeordnet, das jeweils von einem hydraulisch betätigbaren Umschaltventil schaltbar ist, wobei alle Umschaltventile gleichermaßen vom Eingangsdruck der Lenkeinrichtung belastet sind. Somit werden im Servobetrieb, wenn also die Versorgungspumpe aktiv ist, die Sperrventile über die Umschaltventile offen gehalten. Damit sind beide Orbitverdränger an der Ölstromförderung beteiligt. Dagegen liegt im Notbetrieb, also beim Ausfall der Versorgungspumpe, kein Eingangsdruck an der Lenkeinrichtung und damit kein Steuerdruck an den Umschaltventilen an, wodurch die Sperrventile schließen. Damit ist nur die erste der beiden Orbitverdränger an der Ölstromförderung beteiligt.

In einer zweiten Variante sind die sieben Sperrventile und die sieben Umschaltventile in einem Ventilelement vereint, das hinter dem zweiten Orbitverdränger in einer Deckeleinheit untergebracht ist. Dieses Ventilelement wird einerseits vom Eingangsdruck der Lenkeinrichtung und andererseits von einer Druckfeder belastet und besitzt sieben axiale und längenbegrenzte Umfangsnuten, die jeweils zwei zueinander gehörende Kammern beider Orbitverdränger verbinden oder absperren. Damit sind im Servobetrieb wieder beide und im Notlenkbetrieb nur ein Orbitverdränger an der Ölstromförderung beteiligt.

Beide Varianten haben erhebliche Nachteile.
Zunächst ist der Fertigungsaufwand unverhältnismäßig aufwendig und teuer. Das ist bei der ersten Variante in erster Linie auf die Vielzahl von Einzelventilen zurückzuführen, da auf Grund der engen Platzverhältnisse keine Standardventile sondern nur Sonderanfertigungen eingesetzt werden können. Bei der zweiten Variante führt das ebenfalls sonderangefertigte zentrale Ventilelement zu einer langbauenden Lenkeinrichtung und damit zu erhöhten Kosten. Außerdem ist bei dieser Variante von Nachteil, daß für das rotationssymmetrische Ventilelement eine zusätzliche Verdrehsicherung für die genaue Zuordnung der axialen Umfangsnuten zu den Kammerleitungen benötigt wird. Diese Verdrehsicherung hemmt aber die axiale Bewegung des Ventilelementes, was zu störenden Verklemmungen führt.
Beiden Varianten ist gemeinsam, daß der Eingangsdruck bis in den weit entfernten Deckel der Lenkeinrichtung geführt werden muß, um die Schaltventile bzw. des zentralen Ventilelementes zu betätigen, wozu nur die vorhandenen Durchgangsbohrungen für die Befestigungsschrauben genutzt werden können. Diese Durchgangsbohrungen müssen dementsprechend größer als für die Befestigung erforderlich ausgelegt werden, wodurch ihre zentrierende Wirkung für die Verdrängerbaueinheiten verloren geht. Für diese Zentrierung müssen somit zusätzliche Mittel vorgesehen werden.
Ein weiterer Nachteil bei beiden Varianten besteht darin, daß die sieben Kammerleitungen für die Zuschaltung des zweiten Orbitverdrängers außen um den ersten Orbitverdränger herumgeführt werden müssen, was wegen der räumlichen Enge zunächst technisch kompliziert ist und zum anderen zu langen Wegen führt. Lange Wege sind aber wegen der eintretenden Druckverluste funktionell nachteilig.

Aus der DD 117 652 ist eine weitere Lenkeinrichtung dieser Art bekannt,die die Anwendung von drei Übersetzungsverhältnissen ermöglicht. Zur Umschaltung der Ölstromführung besitzt diese Lenkeinrichtung zwischen dem ersten und dem zweiten Verdränger eine Umschalteinheit mit so vielen Ventilkolben, wie Verdrängerkammern vorhanden sind, während ebenso viele über einzelne Ventilkolben entsperrbare Sperrventile in der Peripherie des zweiten und des dritten Verdrängers angeordnet sind. Diese Lenkeinrichtung hat wesentliche Nachteile. So sind die Ventilkolben und die Sperrventile weitestgehend dezentral angeordnet, was eine komplizierte Ölstromführung erfordert. So müssen beispielsweise die radialen Zulaufund Rücklaufkanäle im Kommutatorsystem in zwei Ebenen angeordnet werden und für die Ölstromversorgung aller Verdränger machen sich zusätzliche axiale Versorgungskanäle in allen Verdrängern erforderlich. Es werden auch zusätzliche Sperrventile im ersten Verdränger erforderlich, die die einzelnen Kammern mit dem Rücklauf verbinden oder unterbrechen. Das alles verteuert die Lenkeinrichtung in unvertretbarer Weise. Nachteilig ist auch, dass die Ventilkolben der Umschalteinheit als Zweiwege-/ Zweistellungsventile ausgeführt sein müssen, wodurch sich ein ungünstiges Anschlagverhalten ergibt.
Außerdem können nur maximal drei Verdränger eingesetzt werden.

Der Erfindung liegt daher die Aufgabe zu Grunde, eine gattungsgemäße hydraulische Lenkeinrichtung zu entwikkeln, die einfach im Aufbau und sicher in der Funktion ist.

Diese Aufgabe wird durch die kennzeichnenden Merkmale des Anspruchs 1 gelöst.

Zweckdienliche Ausgestaltungen der Erfindung ergeben sich aus den Ansprüchen 2 bis 5.

Die Erfindung beseitigt die genannten Nachteile des Standes der Technik.
Der wesentliche Vorteil der neuartigen Lenkeinrichtung mit Übersetzungsänderung liegt in der sehr einfachen Bauart begründet, die zum einen zu einer kostengünstigen Fertigung und zum anderen zu einer anwendungsfreundlichen Variabelität führt.
So ist für eine kostengünstige Fertigung ausschlaggebend, daß die Schalteinheit als eine separate Baueinheit gefertigt werden und als ein standardisierte Baueinheit an eine herkömmliche und vorhandene Lenkeinrichtung angesetzt werden kann. Dabei brauchen an der Lenkeinrichtung keine Veränderungen vorgenommen zu werden. Auf Grund der Anordnung der Baueinheit zwischen zwei benachbarten Dosierpumpen kann auf die bisher notwendige Umgehung der ersten Dosierpumpe verzichtet und eine direkte und kurze Ölstromführung zwischen den Dosierpumpen realisiert werden. Das ermöglicht die Verwendung von standardisierten Bauteilen und führt zu kurzen Strömungswegen, was sich vorteilhaft auf den Wirkungsgrad der Lenkeinrichtung auswirkt. Diese Einfachheit und die geringen Einzelteile machen auch die innerbetriebliche Logistik überschaubar und kostengünstig.
Sehr vorteilhaft ist auch, daß die Schalteinheit wahlweise beidseitig zwischen zwei Dosierpumpen eingesetzt werden kann. Das verringert erheblich den fertigungstechnischen Aufwand für die erforderlichen Kanalführungen.
Wesentliche Vorteile kommen auch beim Anwender zum Tragen. So kann er jetzt eine Lenkeinrichtung mit Übersetzungsänderung durch die Wahl der Anzahl der Dosierpumpen ganz speziell auf seinen Anwendungsfall zuschneiden. Er kann dazu auch mit einer Wahl der Baugrößen der einzelnen Dosierpumpen ganz spezielle Abstimmungen vornehmen. Und er kann eine bereits vorhandene einfache Lenkeinrichtung durch den nachträglichen Einbau einer Schalteinheit auf eine Lenkeinrichtung mit Übersetzungsänderung umrüsten.

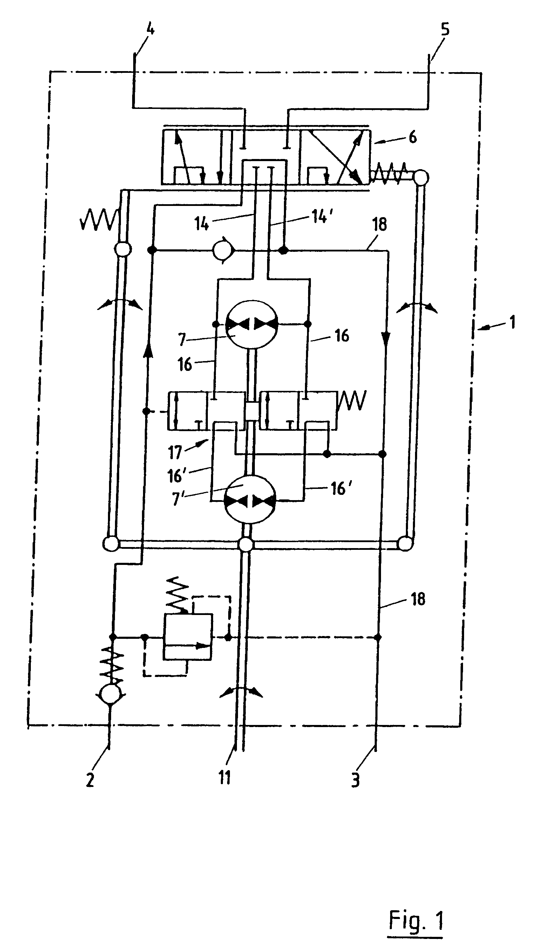

Die Erfindung soll nachstehend an einem Ausführungsbeispiel näher erläutert werden.
Dazu zeigen
- Fig. 1:: eine Symbolik der Lenkeinrichtung,
- Fig. 2:: eine Symbolik der erfindungsgemäßen Schalteinheit der Lenkeinrichtung,
- Fig. 3:: einen Teilschnitt der Lenkeinrichtung,

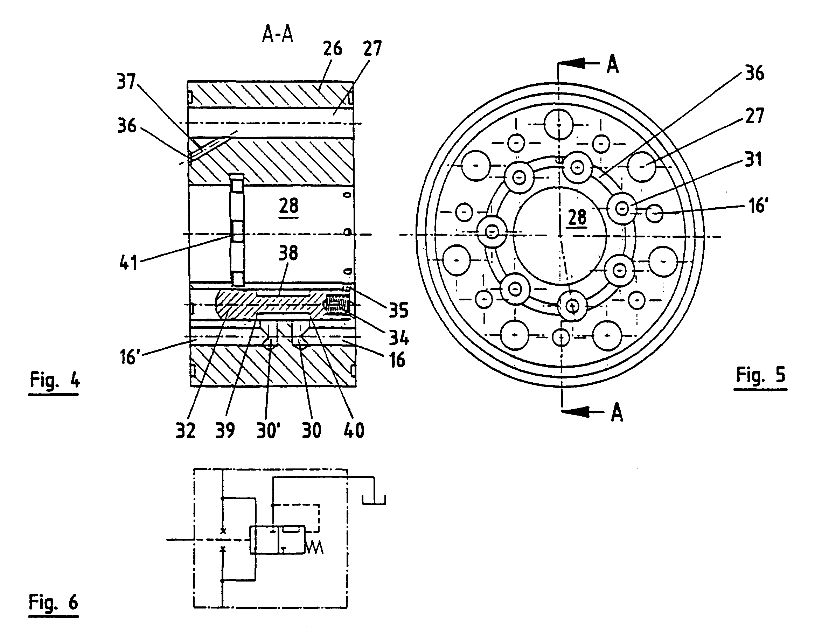

- Fig. 4:: einen Schnitt der Schalteinheit der Lenkeinrichtung in der Servobetriebsstellung,
- Fig. 5:: eine Seitenansicht der Schalteinheit,
- Fig. 6:: eine Symbolik der Schalteinheit nach den Fig. 4 und 5,
- Fig. 7:: einen Schnitt der Schalteinheit der Lenkeinrichtung in der Notlenkbetriebsstellung,
- Fig. 8:: eine Symbolik der Schalteinheit nach Fig. 7,
- Fig. 9:: einen Schnitt der Schalteinheit der Lenkeinrichtung in der Mischbetriebsstellung,
- Fig. 10:: eine Symbolik der Schalteinheit nach Fig. 9 und
- Fig. 11:: eine Symbolik der Schalteinheit beim Einsatz von drei Dosierpumpen.

Der hydraulische Lenkkreislauf besteht im wesentlichen aus einer nicht dargestellten Versorgungspumpe, einer Lenkeinrichtung 1 und einem auf die Fahrzeugräder wirkenden Stellzylinder, der ebenfalls nicht dargestellt ist.
Die Lenkeinrichtung 1 besitzt einen Zulaufanschluß 2, der mit der Versorgungspumpe Verbindung hat, einen mit einem Tank verbundenen Ablaufanschluß 3 und zwei Zylinderanschlüssen 4 und 5 für die zu lenkenden Räder. Hauptelemente der Lenkeinrichtung 1 sind ein Steuerventil 6 und ein oder mehrere nach dem Orbitprinzip arbeitende Dosierpumpen 7, 7' bis 7n mit je einem Außenring 8 mit beispielsweise sieben und einem Läuferzahnrad 9 mit dann sechs Zähnen. Das Steuerventil 6 ist in einem Gehäuse 10 eingepaßt und besitzt bekanntermaßen einen inneren, von einem Lenkrad 11 ansteuerbaren Steuerkolben 12 und eine äußere, mit dem Rotor der Dosierpumpe 7 bis 7n mechanisch verbundene Steuerhülse 13. Steuerkolben 12 und Steuerhülse 13 sind konzentrisch zueinander angeordnet und in einem begrenzten Umfang und gegen die Kraft einer Feder drehbar.
Das Steuerventil 6 besitzt sechs gleichmäßig am Umfang verteilt angeordnete, parallel wirkende Zulaufleitungen 14, die einerseits zum Zulaufanschluß 2 und andererseits über sieben Kommutatorbohrungen 15 zur Eingangsseite der ersten Dosierpumpe 7 Verbindung haben. Diese Kommutatorbohrungen 15 verbinden gleichzeitig die erste Dosierpumpe 7 über die Zulaufleitungen 14' des Steuerventils 6 mit einem der Zylinderanschlüsse 4 oder 5 mit dem Lenkzylinder für die Räder.
Die erste Dosierpumpe 7 ist über sieben Kammerleitungen 16, 16' und unter Zwischenschaltung einer erfindungsgemäßen Schalteinheit 17 mit einer nächstliegenden zweiten Dosierpumpe 7' parallel geschaltet.
Der andere Zylinderanschluß 5 oder 4 ist dabei gleichzeitig über das Steuerventil 6 und einer Ablaufleitung 18 mit dem Ablaufanschluß 3 und so mit dem Tank verbunden.

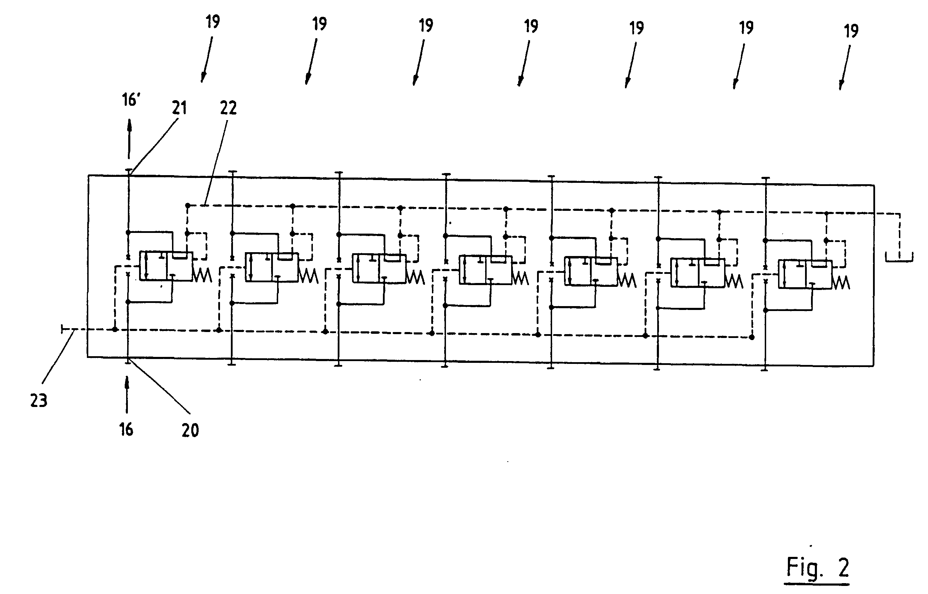

Die Fig. 2 zeigt den Schaltplan der erfindungsgemäßen Schalteinheit 17 mit insgesamt sieben Schaltventilen 19, die jeweils in einer der sieben Kammerleitungen 16, 16' angeordnet sind.
Jedes Schaltventil 19 ist als Zweistellungs-Dreiwege-Ventil ausgebildet und besitzt demnach einen Zulaufanschluß 20 für eine, von einer vorangegangenen Dosierpumpe 7 kommenden Kammerleitung 16, einen Ablaufanschluß 21 für eine, zu einer benachbarten Dosierpumpe 7' führenden Kammerleitung 16' und einen über den Rücklaufanschluß 3 der Lenkeinrichtung zum Tank führenden Rücklaufleitung 22. Vorzugsweise sind die Rücklaufleitungen 22 aller Schaltventile 19 als Sammelleitung ausgeführt. Weiterhin ist jedes Schaltventil 19 mit einem Steueranschluß 23 ausgerüstet, der mit dem Eingangsdruck vom Zulaufanschluß 2 der Lenkeinrichtung 1 gespeist ist. Vorzugsweise sind die Steueranschlüsse 23 aller Schaltventile 19 über eine Sammelleitung miteinander verbunden.

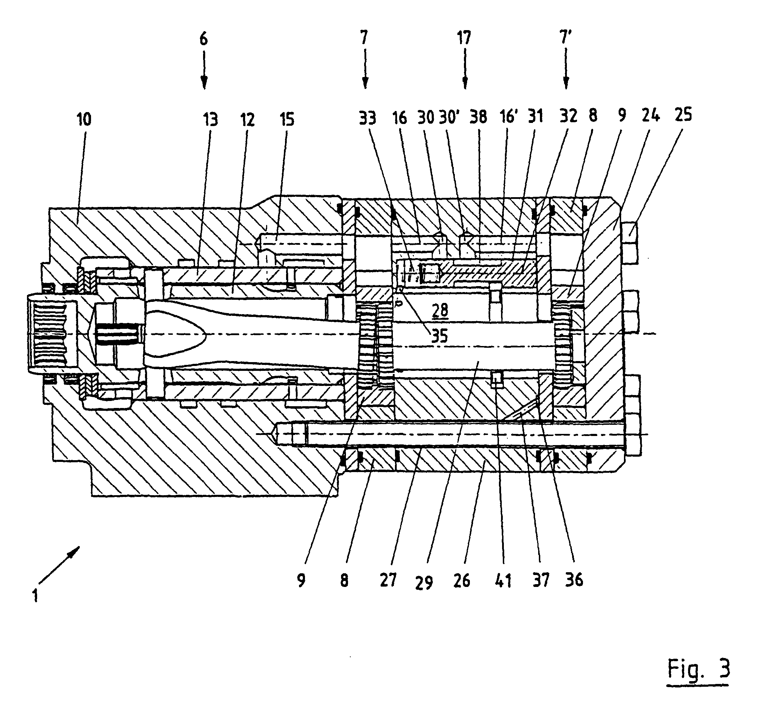

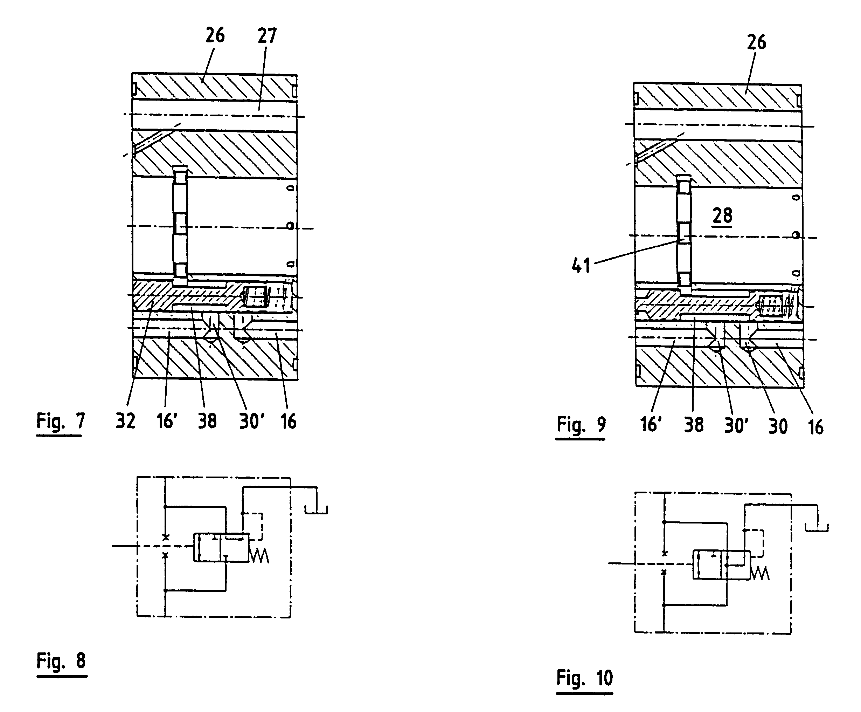

In einer der beiden Stellungen verbindet und in der anderen Stellung trennt das Schaltventil 19 beide Kammerleitungen 16 und 16', wobei in der getrennten Stellung die zur nachgeschalteten Dosierpumpe 7' führende Kammerleitung 16' mit der Rücklaufleitung 22 verbunden ist. Die Schalteinheit 17 ist nach der Fig. 3 zwischen einer ersten Dosierpumpe 7 und einer zweiten Dosierpumpen 7' angeordnet und zusammen mit den beteiligten Dosierpumpen 7, 7' und einem gemeinsamen Deckel 24 mit Hilfe von Befestigungsschrauben 25 am Gehäuse 10 der Lenkeinrichtung 1 verschraubt. Dazu besitzt die Schalteinheit 17 auch den gleichen konstruktiven Grundaufbau wie die Baueinheit einer Dosierpumpe 7, 7', nämlich ein Schaltventilgehäuse 26, sieben Durchgangsbohrungen 27 für die Befestigungsschrauben 25, sowie eine mittige Bohrung 28 für eine, beide benachbarten Läuferzahnräder 9 verbindende Zahnwelle 29. Die von der ersten Dosierpumpe 7 kommenden Kammerleitungen 16 und die zur zweiten Dosierpumpe 7' führenden Kammerleitungen 16' sind als Grundbohrungen ausgeführt und befinden sich parallel zur mittigen Bohrung 28 und in gleicher Teilung auf einem gemeinsamen Teilkreis. Jede Kammerleitung 16 und ihre gegenüberliegende Kammerbohrung 16' münden jeweils über einen radialen Kanal 30 und 30' in eine von sieben Auf nahmebohrungen 31, in der jeweils ein Ventilschieber 32 eingepaßt ist. Die sieben Aufnahmebohrungen 31 sind mit gleicher Teilung auf einem gemeinsamen Teilkreis angeordnet, sind ebenfalls als Grundbohrung ausgeführt und sind von der Seite der nachfolgenden zweiten Dosierpumpe 7' eingebracht. Im montierten Zustand bildet sich zwischen einer Stirnseite des Ventilschiebers 32 und dem Boden der Aufnahmebohrung 31 ein Federraum 33 aus, in dem eine Druckfeder 34 eingesetzt ist und der über einen radialen Leckölkanal 35 mit der mittigen Bohrung 28 der Schalteinheit 17 und damit zum Ablaufanschluß 3 der Lenkeinrichtung 1 Verbindung hat. An der auf Seiten der zweiten Dosierpumpe 7' vorhandenen Stirnseite des Schaltventilgehäuse 26 ist ein Ringkanal 36 eingebracht, der einerseits alle Aufnahmebohrungen 31 miteinander verbindet und der anderseits über sieben radiale Kanäle 37 Zugang zu den sieben Durchgangsbohrungen 27 der Befestigungsschrauben 25 hat. Die Durchgangsbohrungen 27 sind dazu gleichzeitig als Steuerdruckleitungen ausgelegt und verbinden somit den Zulaufanschluß 2 der Lenkeinrichtung 1 mit den nichtfederbelasteten Stirnseiten der Ventilschieber 32.
Der Ventilschieber 32 ist mit einer Umfangsnut 38 ausgerüstet, die zwei Steuerkanten 39 und 40 besitzt. Diese Steuerkanten 39, 40 wirken mit den beiden radialen Kanälen 30 und 30' zusammen, die zu den beiden Kammerleitungen 16 und 16' führen und sie wirken mit radialen Durchbrechungen 41 zusammen, die in die mittige Bohrung 28 des Schaltventilgehäuses 26 münden und die damit Verbindung zur Rücklaufleitung 22 haben.
Dabei ist die Umfangsnut 38 in ihrer axialen Länge und in ihrer Lage auf die Größe und die Lage der beiden radialen Kanäle 30, 30' sowie auf die Lage der radialen Durchbrechungen 41 abgestimmt. So ist die Bedingung erfüllt, daß in einer bestimmten Endstellung des Ventilschiebers 32 beide radialen Kanäle 30, 30' von der Umfangsnut 38 voll überdeckt und in gleicher Stellung die radialen Durchbrechungen 41 vom Ventilschieber 32 abgesperrt sind.
In der anderen Endstellung des Ventilschiebers 32 überdeckt die Umfangsnut 38, so wie es die Fig. 7 zeigt, den zur nachfolgenden zweiten Dosierpumpe 7' führenden radialen Kanal 30' der Kammerleitung 16' und gleichzeitig die zur Rücklaufleitung 22 führenden radialen Durchbrechungen 41.
In einer für den Mischbetrieb zwischen dem Servo- und der Notlenkbetrieb der Lenkeinrichtung maßgebenden Mittelstellung des Ventilschiebers 32, und das zeigt die Fig. 9, überdeckt die Umfangsnut 38 des Ventilschiebers 32 den von der ersten Dosierpumpe 7 kommenden radialen Kanal 30 und die zur Rücklaufleitung 22 führenden radialen Durchbrechungen nur teilweise.

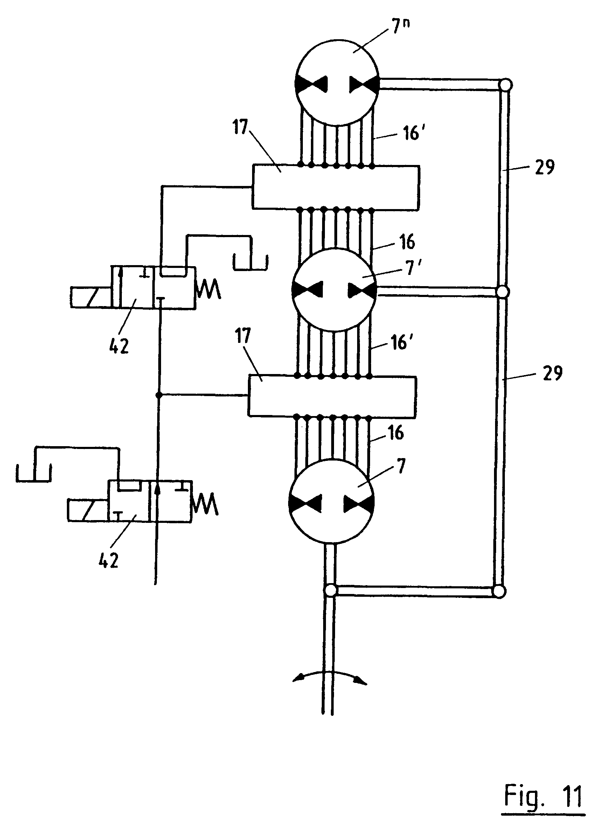

Unter Verwendung mehrerer Schalteinheiten 17 können auch mehrere Dosierpumpen 7n eingesetzt werden, so wie es die Fig. 11 darstellt.

Die Wirkungsweise der hydraulischen Lenkeinrichtung mit mehreren Dosierpumpen 7 bis 7n und mit mindestens einer erfindungsgemäßen Schalteinheit 17 wird nachfolgend erläutert.
Bei nichtbetätigter Lenkeinrichtung 3 befinden sich die Steuerhülse 13 und der Steuerkolben 12 des Steuerventiles 6 in neutraler Stellung, so daß alle sechs Zulaufleitungen 14 geschlossen und eine Kurzschlußverbindung geöffnet, die das von der Versorgungspumpe gelieferte Öl zum Tank 1 zurückführt.

Durch Betätigung des Lenkrades kommt es zur Auslenkung des Steuerkolbens 12 gegenüber der Steuerhülse 13 und damit zur Öffnung der Zulaufleitungen 14. Das Öl gelangt über die Kommutatorbohrungen 15 in die erste Dosierpumpe 7, wird hier gemessen und in dosierter Menge zum Stellzylinder für die Räder gefördert.

Im Servobetrieb sind alle Dosierpumpen 7, 7' an der Ölstromförderung beteiligt. Dazu ist jede Kammer der ersten Dosierpumpe 7 mit einer Kammerleitung 16 der Schalteinheit 17 verbunden, sodaß das Drucköl an allen Ventilschiebern 32 des Schaltventiles 19 anliegt. Gleichzeitig wird der an der Lenkeinrichtung 1 anliegende Eingangsdruck als ein Steuerdruck auf die federabgewandte Seite des beweglichen Ventilschiebers 32 übertragen. Die entsprechende Verbindung führt innerhalb des Schaltventilgehäuses 26 über die Durchgangsbohrungen 27, über die radialen Kanäle 27 und über den Ringkanal 36. Der Steuerdruck belastet die Ventilschieber 32 und verschiebt sie entgegen der Kraft der Druckfedern 34 in eine ihrer beiden Endstellungen, wodurch die Umfangsnuten 38 jeweils in Überdeckung mit den radialen Kanälen 30 kommen und so die jeweils beiden Kammerleitungen 16 und 16' miteinander verbinden. Gleichzeitig verdeckt der Ventilschieber 32 die radialen Durchbrechungen 41 zur mittigen Bohrung 28 des Schaltventilgehäuses 26 und sperrt damit die Verbindung zur Rücklaufleitung 22. Somit sind beide Dosierpumpen 7, 7' miteinander in paralleler Weise verbunden, sodaß sich die beiden Fördervolumen addieren.

Im Notlenkbetrieb, also bei abgeschalteter Versorgungspumpe ist die Leitung am Zulaufanschluß 2 der Lenkeinrichtung 1 drucklos. Das für den Lenkbetrieb notwendige Öl wird jetzt allein durch die manuelle Betätigung des Lenkrades gefördert und zur Verfügung gestellt. Wegen des drucklosen Zustandes am Zulaufanschluß 2 der Lenkeinrichtung 1 sind auch die Ventilschieber 32 des Schaltventiles 19 ohne einen Steuerdruck belastet, sodaß die Ventilschieber 32 durch die Kraft der Druckfedern 34 in die andere ihrer beiden Endstellungen verschoben werden. Dabei verdecken die Ventilschieber 32 die zu den Kammerleitungen 16 führenden radialen Kanäle 30 und unterbrechen damit die Verbindungen zur zweiten Dosierpumpe 7'. Gleichzeitig werden die Verbindungen zu den radialen Durchbrechungen 41 freigegeben und eine Verbindung aller Kammern der zweiten Dosierpumpe 7' mit der Rücklaufleitung 22 hergestellt. Somit ist nur die erste der beiden Dosierpumpe 7 an der Ölstromförderung beteiligt.

Im zwischen dem Servobetrieb und dem Notlenkbetrieb liegenden Mischbetrieb sind die radialen Kanäle 30 teilweise geschlossen bzw. geöffnet, sodaß die zweite Dosiereinheit 7' in gedrosselter Weise noch oder bereits wieder an der Ölstromförderung teilnimmt.

Eine konstruktive Aneinanderreihung von weiteren Dosierpumpen 7n unter jeweiliger Zwischenschaltung einer erfindungsgemäßen Schalteinheit 17 ist unbegrenzt möglich, wobei der Eingangsdruck der Lenkeinrichtung 1 als Steuersignal für jede der Schalteinheiten 17 auch auf einem externen Weg über nichthydraulisch betätigte Ventile 42 übertragen werden kann.

### Aufstellung der Bezugszeichen

- 1: Lenkeinrichtung
- 2: Zulaufanschluß
- 3: Ablaufanschluß
- 4: Zylinderanschluß
- 5: Zylinderanschluß
- 6: Steuerventil
- 7, 7', 7n: Dosierpumpe
- 8: Außenring
- 9: Läuferzahnrad
- 10: Gehäuse
- 11: Lenkrad
- 12: Steuerkolben
- 13: Steuerhülse
- 14, 14': Zulaufleitung
- 15: Kommutatorbohrung
- 16: Kammerleitung
- 17: Schalteinheit
- 18: Ablaufleitung
- 19: Schaltventil
- 20: Zulaufanschluß
- 21: Ablaufanschluß
- 22: Rücklaufleitung
- 23: Steueranschluß
- 24: Deckel
- 25: Befestigungsschraube
- 26: Schaltventilgehäuse
- 27: Durchgangsbohrung
- 28: mittige Bohrung
- 29: Zahnwelle
- 30, 30': radialer Kanal
- 31: Aufnahmebohrung
- 32: Ventilschieber
- 33: Federraum
- 34: Druckfeder
- 35: Leckölkanal
- 36: Ringkanal
- 37: radialer Kanal
- 38: Umfangsnut
- 39: Steuerkante
- 40: Steuerkante
- 41: radiale Durchbrechung
- 42: nichthydraulisch betätigtes Ventil

## Patentansprüche

1. Hydraulische Lenkeinrichtung mit Übersetzungsänderung, die im wesentlichen besteht
- aus einem drehbar gelagerten Steuerventil (6) mit einem inneren, von einem Lenkrad ansteuerbaren Steuerkolben (12) und mit einer äußeren Steuerhülse (13), wobei der Steuerkolben (12) und die Steuerhülse (13) im begrenzten Umfang und gegen die Kraft einer Druckfeder relativ verdrehbar ausgeführt sind und
- aus einem Verdrängersystem mit mehr als einer Dosierpumpe (7, 7'), wobei jede Dosierpumpe (7, 7n) einen Außenring (8) mit inneren Zähnen und ein Läuferzahnrad (9) mit äußeren Zähnen aufweist, die zwischen sich volumenveränderliche Kammern ausbilden, wobei
- das Steuerventil (6) über die Steuerhülse (13) mechanisch mit dem Läuferzahnrad der ersten Dosierpumpe (7) und über Kommutatorbohrungen (15) hydraulisch mit den Kammern der ersten Dosierpumpe (7) verbunden ist,
- die Läuferzahnräder (9) der benachbarten Dosierpumpen (7, 7') über jeweils eine Zahnwelle (29) mechanisch verbunden sind und
- die Kammern der ersten Dosierpumpe (7) mit den Kammern der nächsten Dosierpumpe (7') hydraulisch parallel geschalten sind und die Kammern der nächsten Dosierpumpe (7') von den Kammern der ersten Dosierpumpe (7) über federbelastete Schaltventile (19) trennbar und zur Rücklaufleitung (22) verbindbar ausgeführt sind,
**dadurch gekennzeichnet, daß** alle Schaltventile (19) in einer separaten Schalteinheit (17) zusammengefaßt sind und die Schalteinheit (17) zwischen der ersten und der nächsten Dosierpumpe angeordnet ist, wobei die Schaltventile (19) als Dreiwege-Zweistellungsventile mit einem druckausgeglichenen Ventilschieber (32) ausgeführt sind.

2. Hydraulische Lenkeinrichtung nach Anspruch 1,
**dadurch gekennzeichnet, daß** sich die Schalteinheit (17) aus einem Schaltventilgehäuse (26) und den gleichmäßig verteilt angeordneten Schaltventilen (19) zusammensetzt und jedes Schaltventil (19) aus einer Aufnahmebohrung (31) und einem federbelasteten Ventilschieber (32) besteht, wobei der Ventilschieber (32) auf der federabgewandten Seite vom Eingangsdruck der Lenkeinrichtung (1) belastbar ist und eine Umfangsnut (38) mit zwei Steuerkanten (39, 40) besitzt, die mit einem radialen Kanal (30) für die erste Dosierpumpe (7), mit einem radialen Kanal (30') für die zweite Dosierpumpe (7') und mit radialen Durchbrechungen (41) für die Rücklaufleitung (22) zusammenwirken.

3. Hydraulische Lenkeinrichtung nach Anspruch 2,
**dadurch gekennzeichnet, daß** alle Ventilschieber (32) über einen Ringkanal (36), einem radialen Kanal (37) und den Durchgangsbohrungen (27) für die Befestigungsschrauben (25) mit dem Eingangsanschluß (2) der Lenkeinrichtung (1) verbunden sind.

4. Hydraulische Lenkeinrichtung nach Anspruch 3,
**dadurch gekennzeichnet, daß** die Schalteinheit (17) mit ihrer eingangsdruckbelasteten Seite zur nächsten Dosierpumpe (7') ausgerichtet ist.

5. Hydraulische Lenkeinrichtung nach einem oder mehreren der Ansprüche 1 bis 4,
**dadurch gekennzeichnet, daß** mehr als zwei Dosierpumpen (7 bis 7n) und mehr als eine Schalteinheit (17) verwendet werden.

## Claims

1. Hydraulic steering device with ratio variation, which essentially consists
- of a rotatably mounted control valve (6) with an internal control piston (12), which can be activated by a steering wheel, and with an external control sleeve (13), wherein the control piston (12) and the control sleeve (13) are constructed so as to be relatively rotatable to a limited degree and against the force of a compression spring, and
- of a displacement system with more than one metering pump (7, 7'), wherein each metering pump (7, 7n) comprises an external ring (8) with internal teeth and a rotor gear wheel (9) with external teeth, which between them form chambers of variable volume, wherein
- the control valve (6) is mechanically connected via the control sleeve (13) to the rotor gear wheel of the first metering pump (7) and hydraulically connected via commutator bores (15) to the chambers of the first metering pump (7),
- the rotor gear wheels (9) of the adjacent metering pumps (7, 7') are each mechanically connected via a respective spline shaft (29), and
- the chambers of the first metering pump (7) are hydraulically connected in parallel with the chambers of the next metering pump (7'), and the chambers of the next metering pump (7') are constructed such that they can be separated from the chambers of the first metering pump (7) via spring-loaded switching valves (19) and connected to the return line (22),
**characterised in that** all the switching valves (19) are assembled in a separate switching unit (17), and the switching unit (17) is disposed between the first and the next metering pump, wherein the switching valves (19) are constructed as three-way two-position valves with a pressure-compensated valve gate (32).

2. Hydraulic steering device according to Claim 1,
**characterised in that** the switching unit (17) is composed of a switching valve chamber (26) and the uniformly distributed switching valves (19), and each switching valve (19) consists of a locating bore (31) and a spring-loaded valve gate (32), wherein the valve gate (32) can be loaded by the inlet pressure of the steering device (1) on the side remote from the spring and has a circumferential groove (38) with two control edges (39, 40), which cooperate with a radial duct (30) for the first metering pump (7), with a radial duct (30') for the second metering pump (7') and with radial apertures (41) for the return line (22).

3. Hydraulic steering device according to Claim 2,
**characterised in that** all the valve gates (32) are connected via an annular duct (36), a radial duct (37) and the through-bores (27) for the fastening screws (25) to the inlet connection (2) of the steering device (1).

4. Hydraulic steering device according to Claim 3,
**characterised in that** the switching unit (17) is positioned with its inlet pressure-loaded side towards the next metering pump (7').

5. Hydraulic steering device according to one or more of Claims 1 to 4,
**characterised in that** more than two metering pumps (7 to 7n) and more than one switching unit (17) are used.

## Revendications

1. Dispositif hydraulique de direction, à démultiplication variable, comprenant essentiellement :
- une soupape de commande (6), rotative, avec un piston interne de commande (12) manoeuvrable par un volant, et une douille externe de commande (13), le piston (12) et la douille (13) pouvant tourner l'un par rapport à l'autre contre l'action d'un ressort de pression,
- un système déplaceur comportant plus d'une pompe doseuse (7, 7'), chaque pompe (7, 7n) présentant une bague externe (8) à denture interne et un pignon de rotor (9) à denture externe qui délimitent entre eux des chambres à volume variable,
étant précisé que
- la soupape de commande (6) est reliée mécaniquement, par la douille de commande (13) au pignon de rotor de la première pompe de dosage (7) et par des alésages de commutateur (15) hydrauliquement aux chambres de la première pompe de dosage (7),
- les pignons de rotor (9) des pompes de dosage voisines (7, 7') sont reliées mécaniquement chacune à un arbre denté (29),
- les chambres de la première pompe de dosage (7) et celles de la pompe de dosage (7') le plus proche sont montées hydrauliquement en parallèle et les chambres de la pompe de dosage (7') la plus proche peuvent être séparées des chambres de la première pompe (7) par des soupapes de commutation (14) chargées élastiquement et reliées à une conduite de retour (22),
**caractérisé en ce que**
toutes les soupapes de commutation (19) sont réunies dans une unité séparée de commutation (17), montée entre la première pompe et la pompe qui lui est le plus proche, les soupapes de commutation (19) étant des soupapes 3 voies - 2 positions avec un tiroir de soupape (32) équilibré en pression.

2. Dispositif hydraulique selon la revendication 1,
**caractérisé en ce que**
l'unité de commutation (17) est composée d'un boîtier (26) dans lequel sont réparties régulièrement les soupapes de commutation (19), chacune d'elles comprenant un alésage d'accueil (31) et un tiroir de soupape (32) qui est sous contrainte élastique et qui peut, du côté opposé à celui où s'exerce la contrainte élastique, être chargé par la pression d'entrée du dispositif de direction (1), ce tiroir de soupape (32) possédant une rainure périphérique (38) avec deux bords de commande qui coopèrent avec un canal radial (30) conduisant à la première pompe de dosage (7), avec un canal radial (30') conduisant à la deuxième pompe de dosage (7') et avec des passages radiaux (41) conduisant à la conduite de retour (22).

3. Dispositif hydraulique selon la revendication 2,
**caractérisé en ce que**
tous les tiroirs de soupape (32) sont reliés au raccord d'entrée (2) du dispositif de direction (1), par un canal annulaire (36), un canal radial (37) et les ouvertures de passage (27) pour les vis de fixation (25).

4. Dispositif hydraulique selon la revendication 3,
**caractérisé en ce que**
l'unité de commutation (17) a son côté chargé par la pression d'entrée qui est orienté vers la pompe de dosage (7') le plus proche.

5. Dispositif hydraulique selon une ou plusieurs revendications 1 à 4,
**caractérisé en ce qu'**
il utilise plus de deux pompes de dosage (7 à 7n) et plus d'une unité de commutation (17).
